# EUROPEAN PATENT SPECIFICATION

(11) **EP 2 811 423 B1**
(45) Date of publication and mention of the grant of the patent: **07.08.2019**
(21) Application number: 14170963.4
(22) Date of filing: 03.06.2014
(51) Int. Cl.: G06K 9/00

(54) **Method and apparatus for detecting target**
Verfahren und Vorrichtung zur Zieldetektion
Procédé et appareil pour la détection de cible

(30) Priority: 03.06.2013 CN 201310217323
(43) Date of publication of application: 10.12.2014
(73) Proprietor: Ricoh Company, Ltd., Tokyo 143-8555 (JP)
(72) Inventor: Chen, Chao, Beijing 100044 (CN); Shi, Zhongchao, Beijing 100044 (CN); Lu, Yaojie, Beijing 100044 (CN); Wang, Gang, Beijing 100044 (CN)
(74) Representative: SSM Sandmair

(56) References cited:
- US-A1- 2013 128 001
- SOUTHALL B ET AL: "Real-time vehicle detection for highway driving", 2009 IEEE CONFERENCE ON COMPUTER VISION AND PATTERN RECOGNITION : CVPR 2009 ; MIAMI [BEACH], FLORIDA, USA, 20 - 25 JUNE 2009, IEEE, PISCATAWAY, NJ, 20 June 2009 (2009-06-20), pages 541-548, XP031607124, ISBN: 978-1-4244-3992-8
- Winner Hermann; Hakuli Stephan; Wolf Gabriele: "Handbuch Fahrerassistenzsysteme: Grundlagen, Komponenten und Systeme für aktive Sicherheit und Komfort", 1 January 2009 (2009-01-01), Vieweg + Teubner, Wiesbaden, XP002730622, ISBN: 978-3-8348-0287-3 pages 216-219, * sections 15.5.2.1 and 15.5.2.2 *
- SUN ZEHANG ET AL: "On-road vehicle detection: a review", IEEE TRANSACTIONS ON PATTERN ANALYSIS AND MACHINE INTELLIGENCE, IEEE COMPUTER SOCIETY, USA, vol. 28, no. 5, 1 May 2006 (2006-05-01), pages 694-711, XP008092043, ISSN: 0162-8828, DOI: 10.1109/TPAMI.2006.104 [retrieved on 2006-03-13]
- SEBASTIEN LEFEBVRE ET AL: "Vehicle detection and tracking using Mean Shift segmentation on semi-dense disparity maps", INTELLIGENT VEHICLES SYMPOSIUM (IV), 2012 IEEE, IEEE, 3 June 2012 (2012-06-03), pages 855-860, XP032453071, DOI: 10.1109/IVS.2012.6232280 ISBN: 978-1-4673-2119-8
- Alexandros Makris ET AL: "Integration of visual and depth information for vehicle detection", , 1 July 2011 (2011-07-01), XP055144234, Grenoble, France Retrieved from the Internet: URL:http://hal.inria.fr/inria-00613316/en/ [retrieved on 2014-10-02]

## Description

### BACKGROUND OF THE INVENTION

### 1. Field of the Invention

The present invention relates to a method and an apparatus for detecting a target. Specifically, the present invention relates to a method and an apparatus for recognizing a road target object by extracting line features in an autonomous operation of a vehicle.

### 2. Description of the Related Art

With the widespread use of video detection, there is demand for increasingly higher accuracy of detecting objects in the video image. Additionally, with the demand for autonomous operation, it is important for the autonomous operation of a vehicle to reliably acquire a 3D road environment. The recognition of a 3D road environment mainly includes road estimation, vanishing point calculation, target detection, etc. The target detection is the most important part, as it directly impacts the control of an autonomous vehicle.

Many target detection methods are provided, based on features of targets which appear in an image. In U.S. Patent Application Publication US5937079A for which title of the invention is "Method for stereo image object detection", a method for stereo image object detection is disclosed. In such U.S. patent application, a target detection is performed by only disparity values in such method for stereo image object detection. However, if there are adjacent targets at the same distance of a target in the stereo image, the adjacent targets at the same distance cannot be distinguished by such method. Furthermore, if there are a plurality of objects in a predetermined region, an object division cannot be performed by only a histogram of disparity values. In U.S. Patent US7162084B2 for which the assignee is Microsoft Corporation and the title of the invention is "System and method for automatically detecting and extracting objects in digital image data", a system and a method for automatically detecting and extracting objects in digital image data are disclosed. In such U.S. invention, a target division is performed by horizontal and vertical projections, therefore, it is difficult to process a complex scene with a plurality of targets. Furthermore, in such invention, the targets with a known shape is classified, and obviously, the recognition objects are limited to some extent.

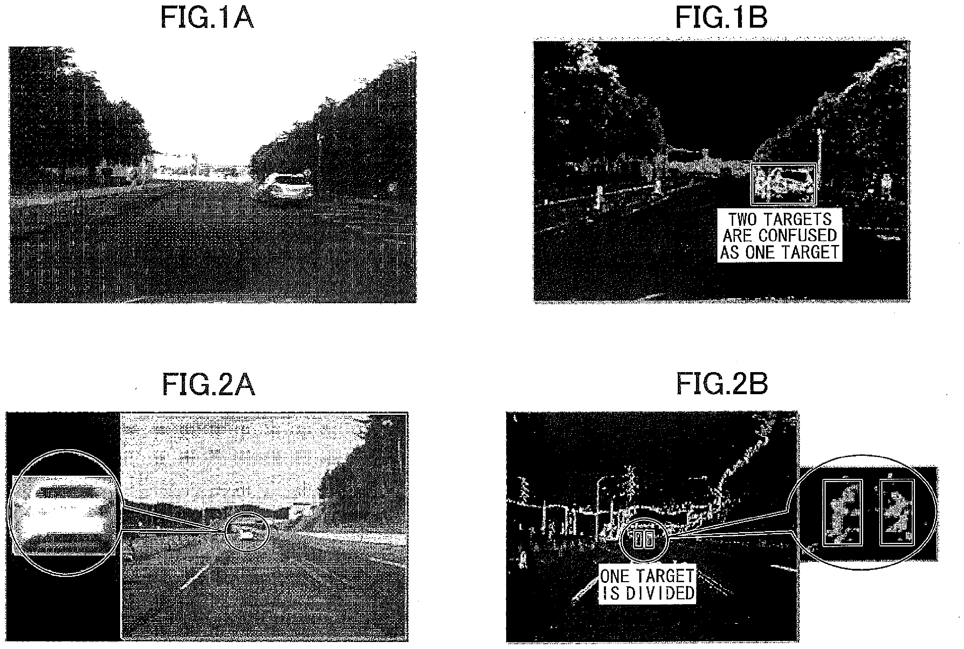

In general, the target detection method are mainly divided into three kinds of methods as follows. (1) a method based on prior knowledge, (2) a method based on movement, and (3) a method based on stereo vision. In the first method, prior knowledge (such as symmetry, color, grayscale, shading, texture, etc.) is used to position a target. This method is very effective for the target detection in a simple scene; however, it is necessary to detect many kinds of targets by using many kinds of features, therefore, there are many detection errors in a complex scene. In the second method, a motional estimation is performed by calculating optical flow, but such method is limited and a stationary target cannot be detected by such method. The third method includes two kinds of sub-methods, i.e., a method based on a dense disparity map and a method based on a sparse disparity map. In a dense disparity map, all points in such disparity map have disparity value to detect a target, but the disadvantage thereof is a large amount of calculation. The method based on a sparse disparity map is widely used as a detection method, but there are still many problems in such method. First, the parameters of the camera are not accurate and the calculation accuracy of the disparity values are affected, therefore the disparity variances of the same target are large and it is difficult to distinguish adjacent objects. As illustrated in FIGs. 1A and 1B, FIG. 1A illustrates that a pedestrian and a vehicle belonging to two targets are recognized as the same one target in FIG. 1B. The Rectangular frame in FIG. 1B is the detected target region. Second, in a sparse disparity map, there are hardly disparity values in the horizontal edges of the target in the disparity map obtained by a horizontal binocular camera, therefore the same target is easily divided into different small targets. As illustrated in FIGs. 2A and 2B, there is no disparity in intermediate horizontal edge parts of the back of a vehicle, because an accurate matching result cannot be obtained from the intermediate parts of the vehicle in the disparity map obtained by a horizontal binocular camera; as a result, the vehicle is recognized as two parts. The Rectangular frames in FIG. 2B are the detected target regions.

The following documents relate to detection of objects in images, in particular in the field of vehicle detection:
SOUTHALL B ET AL: "Real-time vehicle detection for highway driving", 2009 IEEE CONFERENCE ON COMPUTER VISION AND PATTERN RECOGNITION: CVPR 2009; MIAMI [BEACH], FLORIDA, USA 20 - 25 pages 541-548, XP031607124, ISBN 978-1-4244-3992-8;
Winner Hermann; Hakuli Stephan, Wolf Gabriele: "Handbuch Fahrerassistenzsysteme: Grundlagen, Komponenten und Systeme für aktive Sicherheit und Komfort", 1 January 2009 (2009-01-01), Vieweg + Teubner, Wiesbaden, ISBN: 978-3-8348-0287-3, pages 216-219;
SUN ZEHANG ET AL: "On-road vehicle detection: a review", IEEE TRANSACTIONS ON PATTERN ANALYSIS AND MACHINE INTELLIGENCE, IEEE COMPUTER SOCIETY, USA, vol. 28, no. 5, 1 May 2006 (2006-05-01), pages 694-711, XP008092043, ISSN: 0162-8828, DOI: 10.1109/TPAMI.2006.104 [retrieved on 2006-03-13];
US 2013/128001 A1;
SEBASTIEN LEFEBVRE ET AL: "Vehicle detection and tracking using Mean Shift segmentation on semi-dense disparity maps", INTELLIGENT VEHICLES SYMPOSIUM (IV), 2012 IEEE, IEEE, 3 June 2012 (2012-06-03), pages 855-860, XP032453071, DOI: 10.1109/IVS.2012.6232280, ISBN: 978-1-4673-2119-8.

### SUMMARY OF THE INVENTION

The invention is defined by the appended claims.

It is one of objects of the present invention to provide a method and an apparatus for detecting a target based on a grayscale image and a sparse disparity map. In general, in the present invention, a first clustering is performed to obtain candidate target regions from a disparity map. An integration/division of the candidate target regions is performed by combining line feature, disparity and grayscale information, so that a true target region is obtained.

Specifically, according to an aspect of the present invention, a method for detecting a target is provided as set out in Claim 1.

Optional features are set out in the dependent claims.

According to another aspect of the present invention, an apparatus for detecting a target is provided, as set out in Claim 8.

According to the target detecting method of the present invention, an integration is performed based on the line features, therefore, it is possible to effectively avoid the situation where the same target is divided into a plurality of targets incorrectly due to insufficient horizontal edges of the target in a sparse disparity map. Meanwhile, according to the target detecting method of the present invention, two adjacent objects can be effectively divided. Compared with a target detecting method based on a dense disparity map, the target detecting method of the present invention is based on a sparse disparity map, therefore, the calculation amount can be greatly reduced. According to the target detecting method of the present invention, a division/integration of a target is performed by using line features in view of the above two problems, therefore, a true target region can be obtained.

Furthermore, according to the target detecting method of the present invention, a target clustering is performed in a 2D or 3D space; therefore, targets do not overlap, and all of the targets can be detected. Additionally, according to the target detecting method of the present invention, a division for adjacent targets can be performed based on the combination of grayscale information and disparity information.

In addition, according to the target detecting method of the present invention, it is not necessary to know the shape of a target in advance, therefore the present invention may have a stronger adaptability for a plurality of scenes. Furthermore, according to the target detecting method of the present invention, a division/integration of adjacent targets is performed by using the combination of line features, grayscale information and disparity information, therefore the present invention has a relatively strong robustness for complex scenes.

### BRIEF DESCRIPTION OF THE DRAWINGS

The preferable embodiments of the present invention will be described with reference to the accompanying drawings, so as to facilitate the understanding the targets, the features, and the technical and industrial importance of the present invention.
FIGs. 1A and 1B are schematic drawings illustrating that two adjacent targets in a disparity map are confused as one target in the prior art;
FIGs. 2A and 2B are schematic drawings illustrating that one target in a disparity map is recognized as two targets in the prior art;
FIG. 3 is an overall flowchart illustrating a method for detecting a target according to the present invention;
FIG. 4 is a flowchart illustrating an example of a preliminary clustering for the target based on an original disparity map according to the embodiment of the present invention;
FIGs. 5A and 5B are schematic drawings illustrating an example of a pair of grayscale image and disparity map to be processed according to the embodiment of the present invention;
FIG. 5C is a schematic drawing illustrating a U-disparity map after a top-view projection conversion from the disparity map of FIG. 5B;
FIGs. 5D and 5E are schematic drawings illustrating vehicles enlarged in the original disparity map and the U-disparity map, respectively;
FIG. 6A is a schematic drawing illustrating target regions obtained by the clustering;
FIG. 6B is a schematic drawing illustrating an example of the original disparity map with the determined target regions, which were obtained by performing inverse mapping for the clustering result in FIG. 6A;
FIG. 7A is a schematic drawing illustrating an example of removing the target regions that do not meet a limitation condition from the disparity map;
FIG. 7B is a schematic drawing illustrating a target of a vehicle that is divided into two target regions, which is enlarged and displayed on the left side;
FIG. 8 is a flowchart illustrating integration/division processing for the obtained candidate target;
FIGs. 9A and 9B are schematic drawings illustrating an example of a selection process;
FIGs. 10A and 10B are schematic drawings illustrating an example of an integration process of candidate target sets;
FIGs. 11A and 11B are schematic drawings illustrating an example of an integration process of candidate target sets of single candidate target;
FIGs. 12A to 12C are schematic drawings illustrating an extraction process of line features of a first example of the determined ROI;
FIGs. 13A to 13C are schematic drawings illustrating an extraction process of line features of a second example of the determined ROI;
FIGs. 14A to 14C are schematic drawings illustrating an extraction process of line features of a third example of the determined ROI;
FIGs. 15A to 15C are schematic drawings illustrating an extraction process of the connectivity of horizontal edges of a first example of the determined ROI;
FIGs. 16A to 16C are schematic drawings illustrating an extraction process of the connectivity of horizontal edges of a second example of the determined ROI;
FIGs. 17A to 17C are schematic drawings illustrating an extraction process of the connectivity of horizontal edges of a third example of the determined ROI;
FIGs. 18A to 18C are schematic drawings illustrating an extraction process of the connectivity of vertical edges of a first example of the determined ROI;
FIGs. 19A to 19C are schematic drawings illustrating an extraction process of the connectivity of vertical edges of a second example of the determined ROI;
FIGs. 20A to 20C are schematic drawings illustrating an extraction process of the connectivity of vertical edges of a third example of the determined ROI;
FIGs. 21A to 21C are schematic drawings illustrating an extraction process of an outline envelope of a first example of the determined ROI;
FIGs. 22A to 22C are schematic drawings illustrating an extraction process of an outline envelope of a second example of the determined ROI;
FIGs. 23A to 23C are schematic drawings illustrating an extraction process of an outline envelope of a third example of the determined ROI;
FIGs. 24A and 24B are schematic drawings illustrating an example where a new target region is the same as the target region obtained by preliminary clustering;
FIGs. 25A and 25B are schematic drawings illustrating an example where a new target region is composed of a plurality of target regions obtained by preliminary clustering;
FIGs. 26A to 26C are schematic drawings illustrating an example where new target regions are obtained by dividing one target region obtained by a preliminary clustering; and
FIG. 27 is a functional block diagram illustrating an apparatus for detecting a target according to the present invention.

### DETAILED DESCRIPTION OF THE PREFERRED EMBODIMENTS

In the following, embodiments of the present invention are described with reference to the accompanying drawings, so as to facilitate the understanding of the present invention.

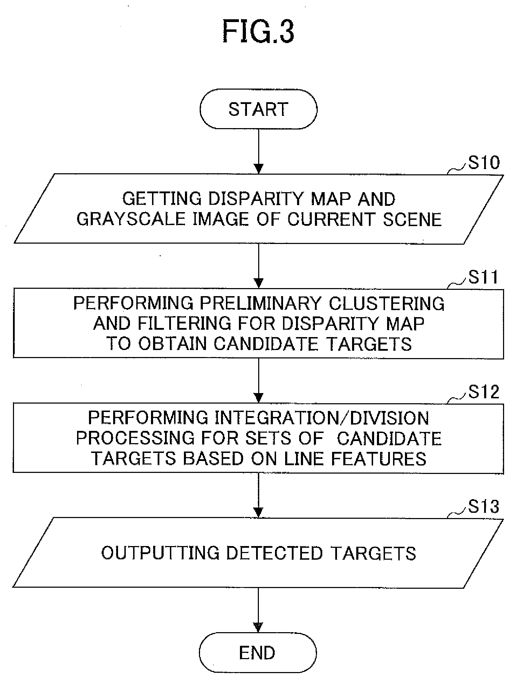

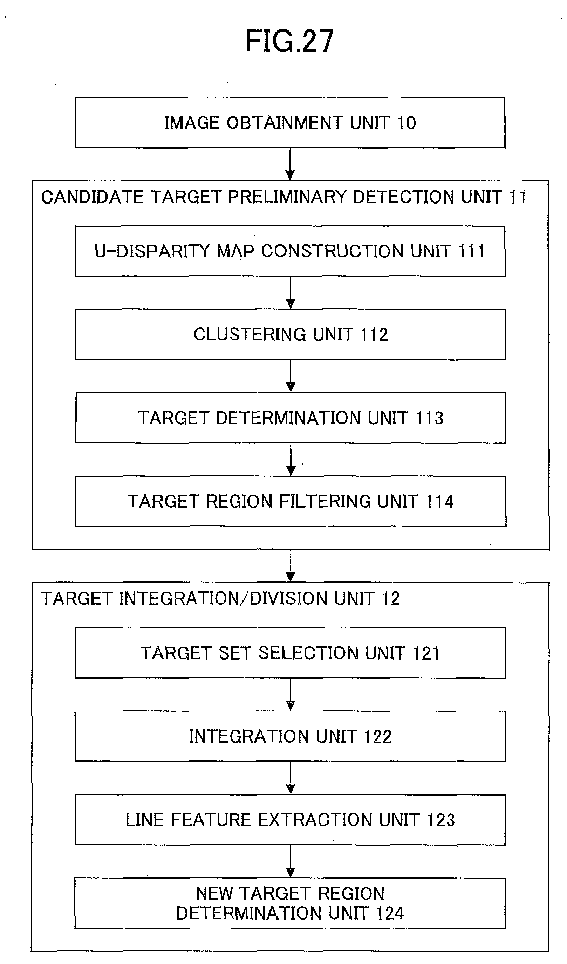

As illustrated in FIG. 3, the present invention provides a method for detecting a target. In step S10, an instant screen is acquired by an image obtainment unit 10 (see FIG. 27) of a binocular camera, which includes an original disparity map and a grayscale image of a current scene, and the acquired original disparity map and grayscale image are output to a candidate target preliminary detection unit 11. In step S11, the candidate target preliminary detection unit 11 performs preliminary clustering and filtering for the disparity map to obtain candidate targets, and inputs the obtained candidate targets to a target integration/division unit 12. In step S12, the target integration/division unit 12 performs integration/division processing for the candidate targets based on line features, and outputs final target objects. Finally, in step S13, a detection result output unit outputs the detected targets.

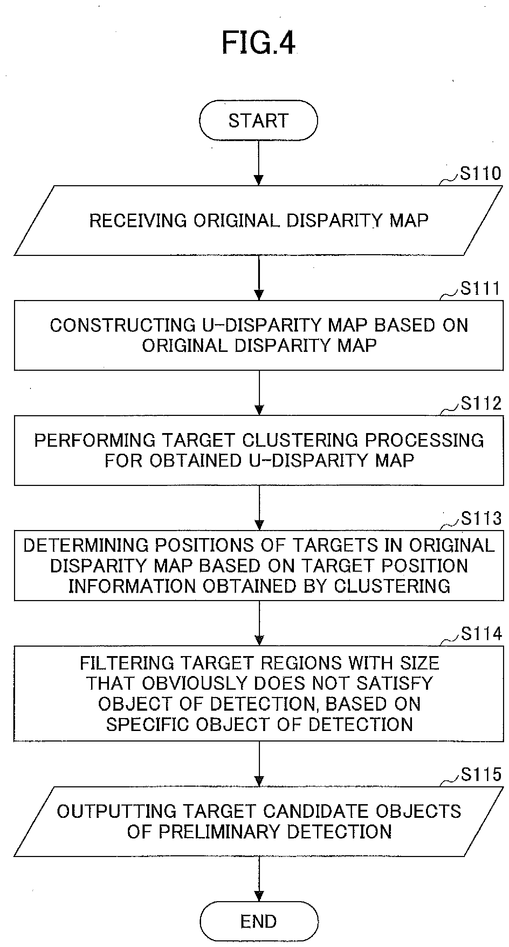

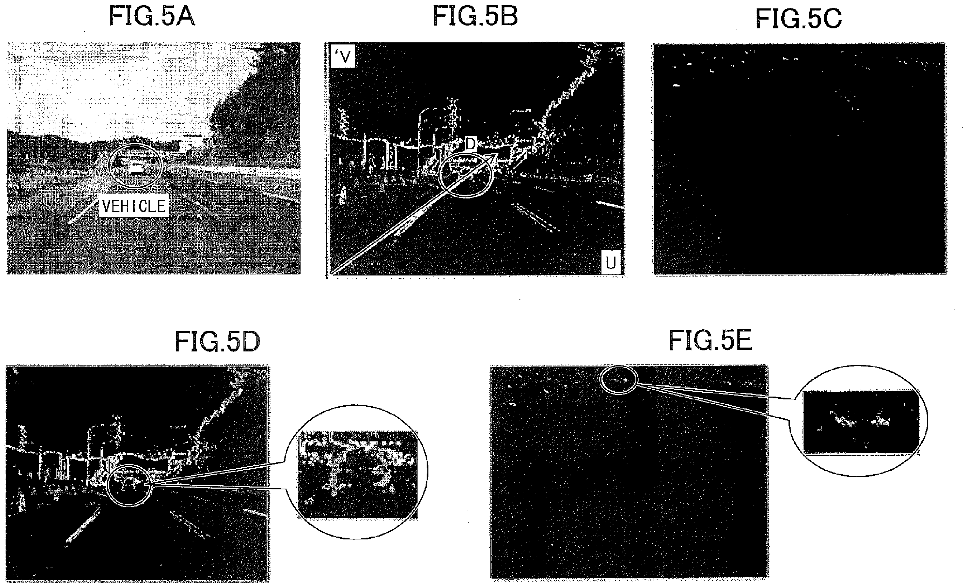

FIG. 4 is a flowchart illustrating an example of preliminary clustering for the target based on an original disparity map according to the embodiment of the present invention. In the present invention, there are mainly two kinds of method for performing clustering for candidate target points in an original sparse disparity map. The first method is a clustering method based on a U-disparity map of the original sparse disparity map, and the second method is a clustering method based on a original sparse disparity map directly. In both of the methods, a rough detection for objects is performed based on the original disparity map and a rough candidate object target is obtained. In the following, as an example of the first clustering method, the preliminary clustering will be described. FIGs. 5A and 5B are schematic drawings illustrating examples of a pair of grayscale image and disparity map to be processed according to the embodiment of the present invention.

As illustrated in FIG. 4, in step S110, an original disparity map acquired by the image obtainment unit 10 is received. In step Sill, a U-disparity map construction unit 111 of the candidate target preliminary detection unit 11 constructs a U-disparity map based on the disparity map in FIG. 5B. Each of the pixels of the original disparity map has three parameters, i.e., a U-coordinate parameter of a horizontal axis, a V-coordinate parameter of a vertical axis and a depth parameter of a D-axis. Specifically, the U-disparity map is constructed by performing a top-view projection conversion for the input original disparity map to obtain the U-disparity map. As illustrated in FIG. 5B, each of the points in the disparity map represents a point in a three-dimensional space (horizontal U-dimension, vertical V-dimension and depth D-dimension). FIG. 5C is a schematic drawing illustrating a U-disparity map after a top-view projection conversion from the disparity map of FIG. 5B. As illustrated in FIG. 5C, V-dimensions of all points are vanishing, after the projection onto a horizontal plane (the U-D plane). The intensity value of each of the points in the U-disparity map represents an accumulated quantity of the pixel of the original disparity map in a V-direction. In the new U-disparity map, the targets are enhanced and the number of the points is greatly reduced. FIGs. 5D and 5E are schematic drawings illustrating vehicles enlarged in the original disparity map and the U-disparity map, respectively. Obviously, in the U-disparity map, the number of the points of a vehicle that is an object is greatly reduced. Construction processing of a U-disparity map is introduced here briefly, and a detailed introduction of construction of a U-disparity map may refer to the following document: "A Complete U-V-D Disparity Study for Stereovision Based 3D Driving Environment Analysis", Zhencheng Hu, Francisco Lamosa, Keiichi Uchimura, Proceedings of the Fifth International Conference on 3-D Digital Imaging and Modeling, 2005.

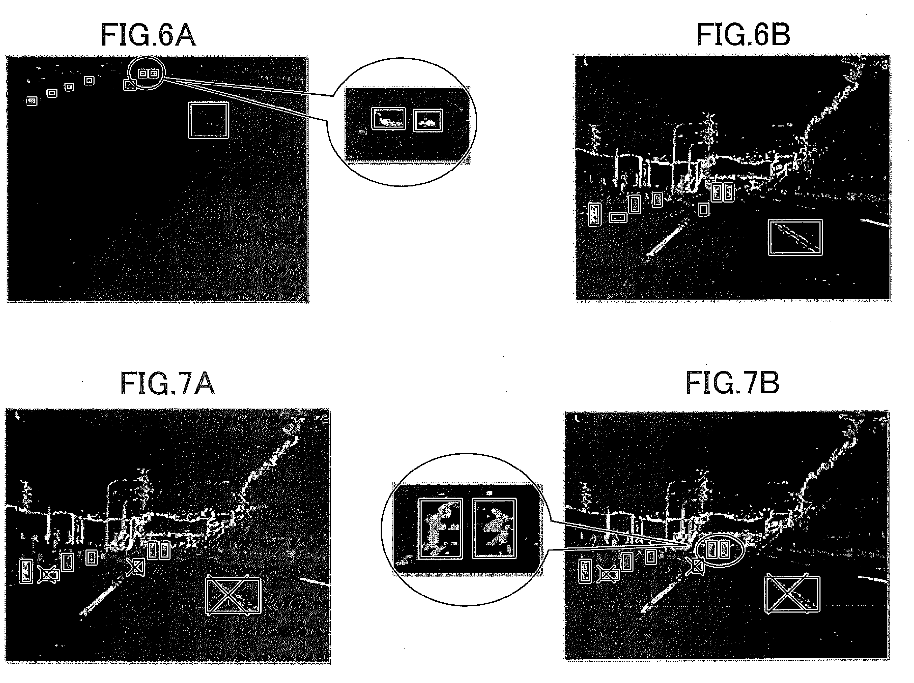

Returning to FIG. 4, in step S112, a clustering unit 112 of the candidate target preliminary detection unit 11 performs target clustering processing for the obtained U-disparity map. In the sparse disparity map, points on a target are discontinuous, accordingly, clustering for the adjacent points is performed to obtain candidate target regions. There are many clustering algorithms, such as a connected component analysis (CCA) or a k-means method. FIG. 6A is illustrates target regions obtained by the clustering. The rectangular frames represent the targets regions obtained by the clustering. As illustrated in the enlarged figure on the right side of FIG. 6A, the vehicle is divided into two targets incorrectly by the clustering. For detailed introduction to the CCA may refer to the following document: http://en.wikipedia.org/wiki/Connected-component_labeling. For detailed introduction to the k-means may refer to the following document: http://en.wikipedia.org/ wiki/K-means_clustering.

After the clustering unit 112 has performed the target clustering processing for the obtained U-disparity map in step S112, inverse mapping is performed from the U-disparity map to the original disparity map. In step S113, a target determination unit 113 of the candidate target preliminary detection unit 11 can obtain a maximum disparity value, a minimum disparity value and a U-coordinate of each of the targets, based on position information of the targets detected from the U-disparity map. a maximum disparity value and a minimum disparity value of a V-coordinate can be determined by performing a PCA (principal component analysis) and a distribution characteristics analysis of the points for the original disparity map. From the above, the positions of the targets in the disparity map can be determined. For detailed introduction to the PCA may refer to the following document: http://en.wikipedia.org/wiki/Principal_component _analysis. FIG. 6B is a schematic drawing illustrating an example of the original disparity map with the determined target regions, which may be obtained by performing inverse mapping for the clustering result in FIG. 6A. As illustrated in FIG. 6B, the rectangular frame represents a target region in the original disparity map, which is obtained by the clustering.

In general, a plurality of targets may be obtained by the clustering, and many of them may be unexpected targets. Accordingly, in step S114, in order to obtain more accurate target regions, a target region filtering unit 114 of the candidate target preliminary detection unit 11 removes the targets with a size that is too large, small, high or low, and retains expected targets for subsequent processing. In the original disparity map, the intensity of each of the points represents depth information, namely, the original disparity map includes 3D information in the real world (height, width and distance), for which the unit is meter. For the particular application, different limitations such as size and height may be set to perform target filtering. For example, for detecting a vehicle, filtering for the determined targets may be performed based on a limitation of the size of a conventional vehicle, namely, the target regions in which the size does not meet the size of a conventional vehicle are removed. FIG. 7A is a schematic drawing illustrating an example of removing the target regions that do not meet a limitation condition from the disparity map. As illustrated in FIG. 7A, the target regions with the "×" mark are the removed target regions. FIG. 7B is a schematic drawing illustrating a target of a vehicle that is divided into two target regions, which is enlarged and displayed on the left side. As illustrated in FIG. 7B, the vehicle is still divided into two parts, since the vehicle obtained by the clustering in the U-disparity map is divided into two parts.

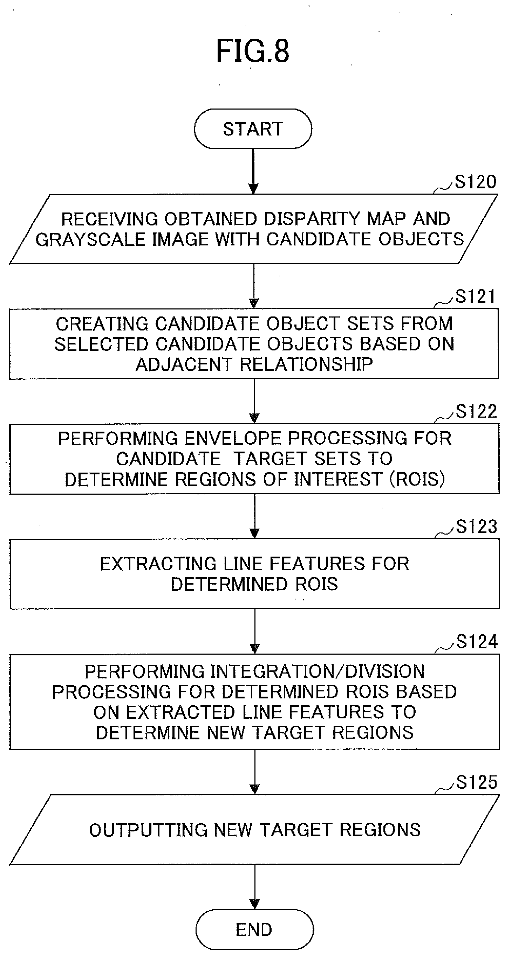

According to the above processing, a preliminary detection of the targets is performed based on the disparity map and the candidate targets are obtained, and the candidate targets detected by the preliminary detection are output in step S115. On this basis, it is necessary to perform a further detection for the candidate targets to determine the final object targets. Therefore, in the embodiment of the present invention, the target integration/division unit 12 performs integration/division processing for the obtained candidate targets based on the line features in step S12, and outputs the final target objects. FIG. 8 is a flowchart illustrating the integration/division processing for the obtained candidate target.

As illustrated in FIG. 8, in step S120, the target integration/division unit 12 receives the obtained disparity map and grayscale image with the candidate targets.

In step S121, a target set selection unit 121 of the target integration/division unit 12 selects candidate targets from the candidate targets obtained by the clustering and filtering of the candidate target preliminary detection unit 11, and forms candidate target sets for subsequent processing. In this step, the candidate targets for which an adjacent distance therebetween in the U-direction, V-direction and D-direction (the depth direction) is within the range of a predetermined threshold, are selected into a candidate target set; and other candidate targets that are not selected, are set as an independent candidate target set, respectively.

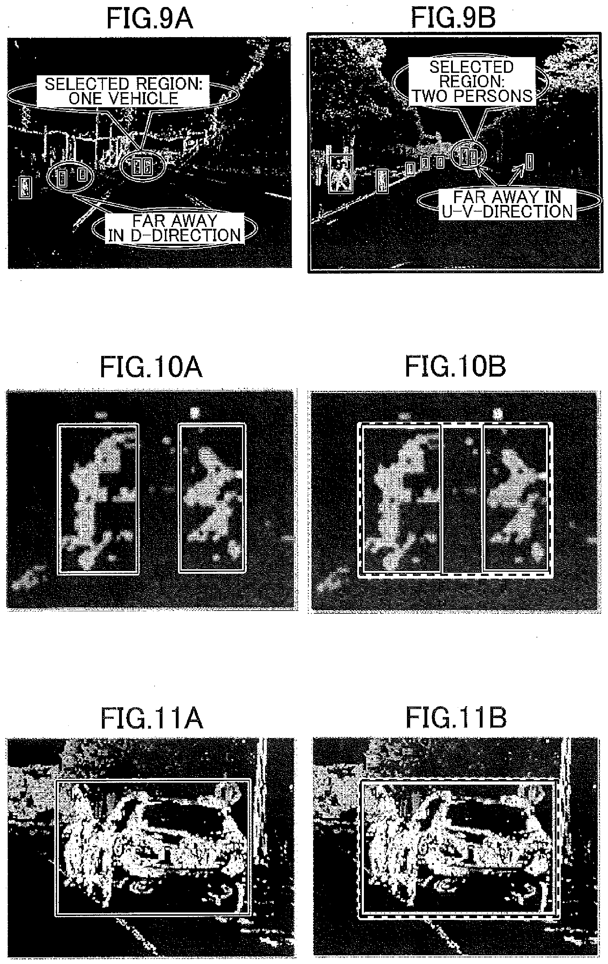

The points in the disparity map correspond to the width, the height and the distance in the real world, therefore the predetermined threshold of the adjacent targets is set based on an actual size. In the application environment of the method of the present invention, the threshold may be set as 1 meter, 2 meters, 3 meters, 4 meters, etc. For the vehicle illustrated in FIG. 7B that is determined as two candidate targets, they are selected into one candidate target set, by using the selection of the target set performed in step S121. FIGs. 9A and 9B are schematic drawings illustrating an example of a selection process. As illustrated in FIG. 9A, two separate adjacent candidate target regions of a vehicle are selected into one candidate target set, since the horizontal distance therebetween is within the range of a predetermined threshold. Meanwhile, the two adjacent candidate target regions of two pillars are not selected into one candidate target set, since the distance in the depth direction, i.e., the D-direction is large. Similarly, as illustrated in FIG. 9B, two separate adjacent candidate target regions representing a vehicle are selected into one candidate target set, since the horizontal distance is within the range of a predetermined threshold. One of the two separate adjacent candidate target regions representing a vehicle and another one candidate target region cannot be selected into the same one candidate target set, since the horizontal U-distance in the U-V direction is large.

After the result of the set selection is provided from the target set selection unit 121 to an integration unit 122, in step S122, the integration unit 122 performs integration processing for each of the candidate target sets to determine regions of interest (ROIs). Specifically, for a candidate target set with a plurality of candidate targets, the ROI is determined based on an envelope of all candidate target regions in the candidate target set. FIGs. 10A and 10B are schematic drawings illustrating an example of an integration process of candidate target sets. As illustrated in FIGs. 10A and 10B, the selected target set includes two targets, the rectangular frames in FIG. 10A represent the candidate target regions that are obtained by the clustering and are selected into the same one set, and the dotted line in FIG. 10B represents the envelope of the determined ROIs. Additionally, for a target set that includes only one candidate target, the target region obtained by the clustering may be determined as the ROI directly. FIGs. 11A and 11B are schematic drawings illustrating an example of an integration process of candidate target sets of a single candidate target. As illustrated in FIG. 11A and 11B, the candidate target set includes only one candidate target, the rectangular frame in FIG. 11A represents the single candidate target region obtained by the clustering, and the dotted line in FIG. 11B represents the envelope of the determined ROI. The integration here is not a substantial integration for the objects in a set, but merely means that the objects in the set are processed as a whole in the subsequent processing.

After the integration processing performed by the integration unit 122, the integrated ROIs are provided to a line feature extraction unit 123. In step S123, the line feature extraction unit 123 performs a homogeneity measurement of a line based on the combination of line features, the grayscale information and the disparity information of the determined ROIs, so as to perform the integration and division of the targets in the determined ROIs. The homogeneity features of a line include the homogeneity of the grayscale and the homogeneity of the disparity. The order that performing the homogeneity measurement of the disparity and the homogeneity measurement of the grayscale is not limited, the homogeneity measurement of the disparity may be performed before the homogeneity measurement of the grayscale, or the homogeneity measurement of the grayscale may be performed before the homogeneity measurement of the disparity. The homogeneity of the grayscale means that a predetermined line has similar grayscales or edges. In the homogeneity measurement, foreground points and background points are determined by a principal component analysis (PCA) of disparity information in advance, the background points are removed, and the homogeneity measurement is performed for the retained foreground points. The homogeneity of the disparity means that the foreground points have similar disparity values in a predetermined line. The homogeneity of the disparity may also be measured by a PCA method. Therefore, it is determined that the homogeneity is met, only if both of the grayscale and the disparity meet the homogeneity condition. The line features of the determined ROIs are extracted by such homogeneity measurement of the line to perform the following determination of new target regions.

In the present invention, there are four kinds of line features (characteristics): (1) the homogeneity of a horizontal line, (2) the connectivity of a horizontal edge, (3) the connectivity of a vertical edge, and (4) the envelope characteristic of an outline. One of such four kinds of features may be extracted individually to perform the subsequent integration/division processing and the determination of new target regions, and alternatively, the combination of the two, three or four line features may also be extracted to perform the subsequent integration/division processing and the determination of new target regions. The more the extracted line features are, the more accurate the obtained result is. Obviously, the line features of the ROIs are not limited to four, and may be more than four. Therefore, other line features of the ROIs may also be applied to the present invention. The line features are described as follows.

The homogeneity of a horizontal line means the homogeneity of the grayscale and the disparity on a specific horizontal line in a target. In each of the ROIs for performing the integration/division, some lines passing through foreground targets in a horizontal direction may be set. These lines may be not in the horizontal direction completely, and may be approximately in the horizontal direction. It is determined that a predetermined line meets the homogeneity, if most of the points on the line have similar grayscale and disparity values. Otherwise, it is determined that the line does not meet the homogeneity condition. The homogeneity of the disparity may be measured by a PCA method. Furthermore, the homogeneity of the grayscale on a line may be determined by calculating the variance of grayscale of all pixels on the line. It should be noted that, the foreground regions and the background regions of the determined ROIs may be obtained by a PCA of disparity values. Only the foreground regions and the points therein are considered for the homogeneity measurement. External regions, such as the upper left corner or the upper right corner, are not used for the homogeneity measurement.

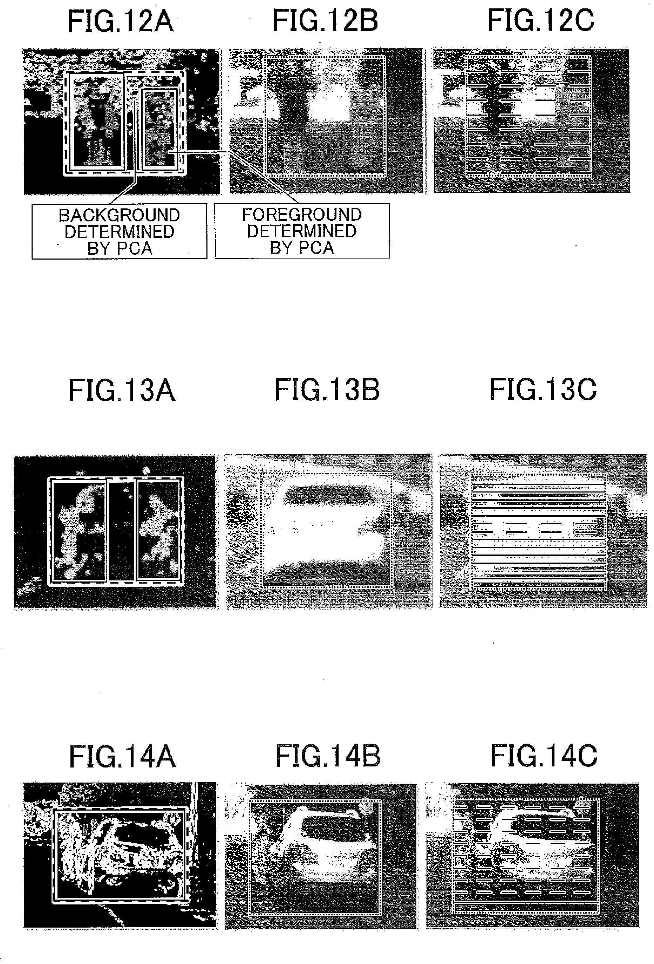

FIGs. 12A to 12C are schematic drawings illustrating an extraction process of line features of a first example of the determined ROI. In actuality, all of the rows (lines) are used in the present invention. As illustrated in FIGs. 12A to 12C, FIG. 12A is a depth image or a disparity map, FIG. 12B is a grayscale image, and FIG. 12C is a schematic drawing illustrating the extraction result of line features based on FIGs. 12A and 12B. FIGs. 12A to 12C of the same scene illustrate a target set (ROI) including two persons. The difference of the disparity values of the upper half bodies of the two persons is very large. The difference of the disparity values between the upper half bodies of the two persons and the part therebetween is very large. The difference of the disparity values between those two cannot be shown directly in FIG. 12A, since only the grayscale image is submitted as the drawing of the present application. However, in the color corresponding to FIG. 12A, the great difference of the disparity values between the upper half bodies of the two persons and the part therebetween can be shown by different colors. It is determined that the position between the two persons belongs to the background, by a PCA for the ROI. The horizontal lines do not meet the homogeneity since the left and right parts are divided by the intermediate part of the background, although the disparity values of the upper half bodies of the two persons are too similar and belong to the foreground. With respect to the lower half bodies, the colors of the legs of the two persons are quite different. The lines of the lower half bodies do not meet the homogeneity, since it is determined that the horizontal lines meet the homogeneity if only both of the grayscale and the disparity meet the homogeneity. In FIG. 12C, the straight lines represent horizontal lines that meet the homogeneity, and the broken lines represent horizontal lines that do not meet the homogeneity. The straight lines and the broken lines are merely used for the description, and the positions thereof may not be accurate. Accordingly, the two candidate targets in the same one set do not have homogeneity of the line features, and the two candidate targets may be divided into new targets based on the extraction result of the line features in the subsequent processing.

FIGs. 13A to 13C are schematic drawings illustrating an extraction process of line features of a second example of the determined ROI. As illustrated in FIGs. 13A to 13C, FIG. 13A is a depth image or a disparity map, FIG. 13B is a grayscale image, and FIG. 13C is a schematic drawing illustrating the extraction result of line features based on FIGs. 13A and 13B. FIGs. 13A to 13C of the same scene illustrate a target set (ROI) including a vehicle that is divided. The disparity values of the back of the vehicle are similar, therefore the ROI have the homogeneity of the line features. Meanwhile, the grayscale values of the back of the vehicle, except for the light regions, are also similar in the horizontal direction; the light regions and the other parts of the back of the vehicle are very different. Accordingly, as the extraction result of the line features illustrated in FIG. 13C, the broken lines are located in the horizontal parts of the light; and it means that the part of the light does not have the homogeneity of the line features in the horizontal direction, and other regions have homogeneity in the horizontal direction as illustrated by the straight lines.

FIGs. 14A to 14C are schematic drawings illustrating an extraction process of line features of a third example of the determined ROI. As illustrated in FIGs. 14A to 14C, FIG. 14A is a depth image or a disparity map, FIG. 14B is a grayscale image, and FIG. 14C is a schematic drawing illustrating the extraction result of line features based on FIGs. 14A and 14B. FIGs. 14A to 14C of the same scene illustrate a candidate target set (ROI) including a pedestrian and a vehicle. Obviously, most of the horizontal lines do not have the homogeneity, because of the difference in the grayscale values between the person and the vehicle. Therefore, there are many the broken lines, which represent that the ROI illustrated in FIGs. 14A to 14C do not meet the homogeneity in the horizontal direction. There is a possibility that the ROI meets the homogeneity in the horizontal direction, in cases where a person is lying on a vehicle and the colors between the clothes of the person and the vehicle are the same or similar; however, the likelihood of such cases is extremely low.

There is a possibility that both of the horizontal lines with the homogeneity and the horizontal lines without the homogeneity exist in candidate target set regions (ROI); therefore, when it is determined whether the foreground objects in the whole ROI meet the homogeneity of the line features, it is necessary to set a predetermined threshold of the number of the horizontal lines with the homogeneity to determine whether the ROI is one target or not. It is determined that the ROI includes only one target object, if the number of the horizontal lines that meet the homogeneity is greater than or equal to the predetermined threshold; otherwise, it is determined that the ROI includes more than one target object. In usual, the predetermined threshold of the number of the lines (rows) is set as more that 60% of the number of all horizontal lines in the ROI. Therefore, the threshold may be set as 60, 70, 80, 90, etc., rows, when the number of the extracted lines is 100. Furthermore, the break points in each of the rows, which do not have the homogeneity, are used to determine a division line between different target regions, by which the ROI is divided into different targets in the following determination of new target.

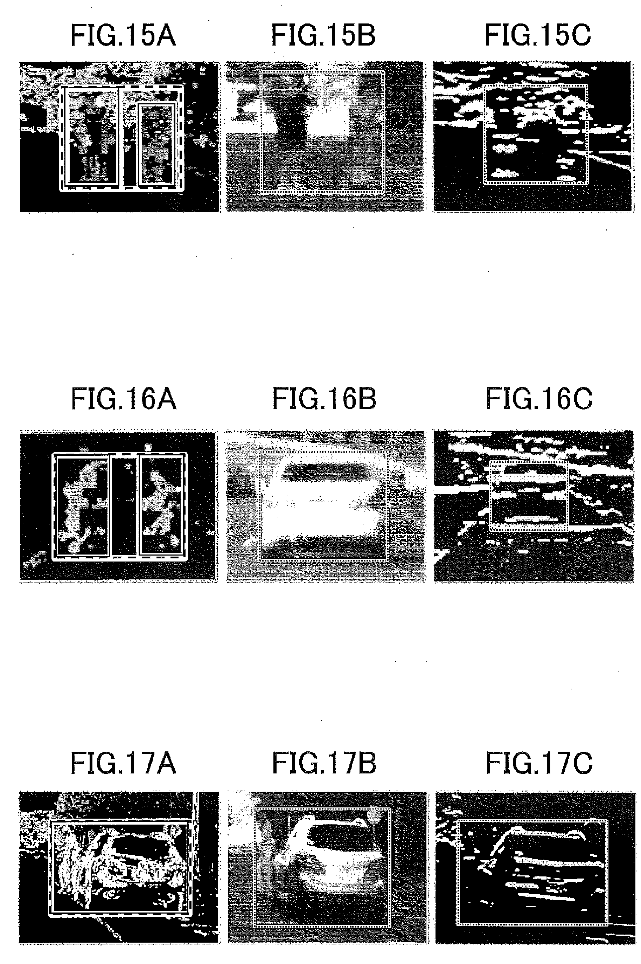

In the following, the extraction of the second line feature, i.e., the connectivity of horizontal edges, is described. In such extraction, horizontal edges are used to measure the connectivity of targets on specific horizontal lines. In general, a horizontal edge image is generated based on the grayscale image. Meanwhile, edges with a large difference of disparity values are determined as edges belonging to different targets based on a disparity analysis, and the different targets are divided. For each of the ROIs for the integration/division processing, it is determined that the ROI includes only one target object, if there is horizontal edge line that passes through the foreground target region of the ROI in the horizontal direction; otherwise, it is determined that the ROI includes more than one target object. It should be noted that, the lines that passing through the foreground in the horizontal direction may not be in the horizontal direction completely. Additionally, the break points in each of the rows may be used to determine a division line of the objects. FIGs. 15A to 15C are schematic drawings illustrating an extraction process of the connectivity of horizontal edges of a first example of the determined ROI. FIGs. 16A to 16C are schematic drawings illustrating an extraction process of the connectivity of horizontal edges of a second example of the determined ROI. FIGs. 17A to 17C are schematic drawings illustrating an extraction process of the connectivity of horizontal edges of a third example of the determined ROI. FIGs. 15A, 16A and 17A are disparity maps of the first to third examples of the ROIs, FIGs. 15B, 16B and 17B are grayscale images of the first to third examples of the ROIs, FIGs. 15C, 16C and 17C illustrate horizontal edges generated based on grayscale images of the first to third examples of the ROIs. The method for generating a horizontal edge image is common knowledge in the art, and the description thereof is omitted here. FIGs. 15C, 16C and 17C illustrate the connectivity of the horizontal edges of different target sets of the first to third examples of the ROIs; there are some horizontal edges that pass through the foreground region of the whole ROI, for example, the foreground region of the second example of the ROI, and the connectivity of the horizontal edge is satisfied. On the other hand, the first example of the ROI includes a target set of two pedestrians and the third example of the ROI includes a target set of one pedestrian and one vehicle, and there is no horizontal edge that passes through the foreground region of the ROI. The integration/division processing of the object is performed for the candidate target sets of the determined ROIs in the original disparity map and the grayscale image, based on the obtained connectivity of each of the horizontal edges.

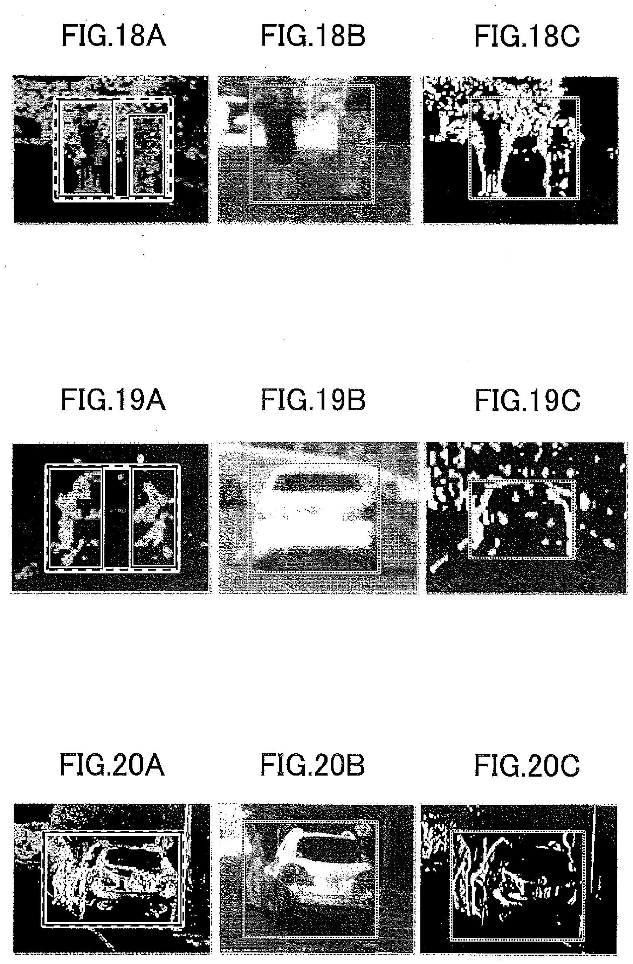

In the following, the extraction of the third line feature, i.e., the connectivity of vertical edges is described. In such extraction, vertical edges are used to measure the connectivity of targets on specific vertical lines. In general, a vertical edge image is generated based on the grayscale image. Meanwhile, edges with a large difference of disparity values are determined as edges belonging to different targets based on a disparity analysis, and the different targets are divided. For each of the ROIs for the integration/division processing, it is determined that the ROI includes more than one target object, if there is vertical edge line that passes through the foreground target region of the ROI in the vertical direction; otherwise, it is determined that the ROI includes only one target object. It should be noted that, the lines that passing through the foreground in the vertical direction may not be in the vertical direction completely. Furthermore, regarding "pass through" herein, the lines do not pass through outer parts of the vertical edge image of the ROI region, but pass through the part between both sides of the vertical edge image of the ROI region. Additionally, the lines that pass through the foreground may be used to determine a division line of the objects. There are two vertical edges that pass through the interior of the foreground target region of the determined ROI region, when there are two targets in the determined ROI region. In general, the edge on the left side of the ROI region is set as the right edge of the left target, and the edge on the right side of the ROI region is set as the left edge of the right target. Accordingly, the lines passing through in the vertical direction may be used as the division line for determining the targets. FIGs. 18A to 18C are schematic drawings illustrating an extraction process of the connectivity of vertical edges of a first example of the determined ROI. FIGs. 19A to 19C are schematic drawings illustrating an extraction process of the connectivity of vertical edges of a second example of the determined ROI. FIGs. 20A to 20C are schematic drawings illustrating an extraction process of the connectivity of vertical edges of a third example of the determined ROI. FIGs. 18A, 19A and 20A are disparity maps of the first to third examples of the ROIs, FIGs. 18B, 19B and 20B are grayscale images of the first to third examples of the ROIs, and FIGs. 18C, 19C and 20C illustrate vertical edges generated based on grayscale images of the first to third examples of the ROIs. The method for generating a vertical edge image is common knowledge in the art, and the description thereof is omitted here. FIGs. 18C, 19C and 20C illustrate the connectivity of the vertical edges of different target sets of the first to third examples of the ROIs, where there are some vertical edges that pass through the foreground region of the whole ROI. For example, as illustrated in FIG. 19C, in the target set including a divided vehicle, there is no vertical edge that passes through the foreground target region of the ROI (the foreground is obtained by a PCA of the disparity values), but there are two vertical edges that pass through both sides (out sides) of the foreground target; therefore, the connectivity of such vertical edges means that there is only one candidate target in the second example of the ROI. As illustrated in FIGs. 18C and 20C, the first example of the ROI includes a target set of two pedestrians and the third example of the ROI includes a target set of one pedestrian and one vehicle, and there are two vertical edges that pass through the target set region including two pedestrians or the target set region including one pedestrian and one vehicle in the interior of the foreground target region of the vertical edge image illustrated in FIG. 18C or 20C. Accordingly, the integration/division processing of the object is performed for the candidate target sets of the determined using ROIs in the original disparity map and the grayscale image, based on the connectivity of the vertical edges of these two lines passing through in the vertical direction.

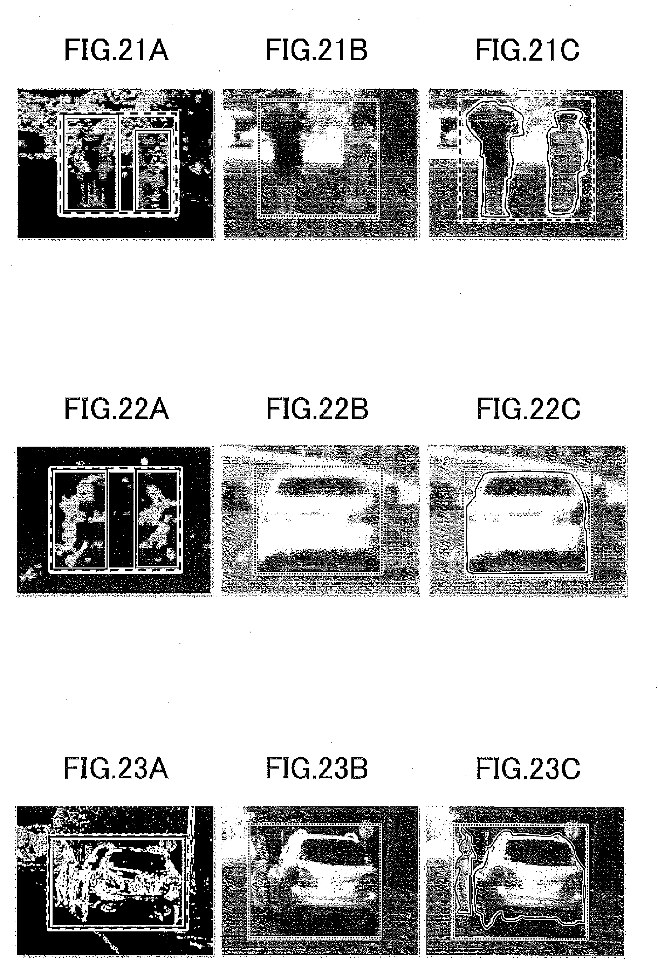

In the following, the extraction of the fourth line feature, i.e., the outline envelope is described. The division and integration of the targets is performed based on the extracted outline envelope feature. The outline is extracted from the original disparity map and an analysis for the line feature is performed. For each of the ROIs for the integration/division processing, it is determined that the ROI includes only one target object, if there is an outline that envelops all foreground target regions, otherwise, it is determined that the ROI includes more than one target object. Additionally, the outline may be used to determine a division line of the targets. FIGs. 21A to 21C are schematic drawings illustrating an extraction process of an outline envelope of a first example of the determined ROI. FIGs. 22A to 22C are schematic drawings illustrating an extraction process of an outline envelope of a second example of the determined ROI. FIGs. 23A to 23C are schematic drawings illustrating an extraction process of an outline envelope of a third example of the determined ROI. FIGs. 21A, 22A and 23A are disparity maps of the first to third examples of the ROIs, FIGs. 21B, 22B and 23B are grayscale images of the first to third examples of the ROIs, FIGs. 21C, 22C and 23C are outline envelop images generated based on grayscale images of the first to third examples of the ROIs. The method for generating an outline envelop image is common knowledge in the art, and the description thereof is omitted here. FIGs. 21C, 22C and 23C illustrate outline envelops of different target sets of the first to third examples of the ROIs; there are outline envelopes that envelop the foreground regions of the whole ROI, for example, the foreground regions of the second example of the ROI, and the line feature of the outline envelope is satisfied. On the other hand, the first example of the ROI includes a target set of two pedestrians and the third example of the ROI includes a target set of one pedestrian and one vehicle; there is no outline that envelops all foreground regions, and there is only some small outlines that envelop each of the sub-regions of the target foreground. Accordingly, the integration/division processing of the object is performed for the candidate target sets of the determined ROIs in the original disparity map and the grayscale image, based on the obtained feature of these outline envelopes.

The target objects may also have other line features, the extraction of these other line features may also be applied to the method of the present invention, and the description thereof is omitted here.

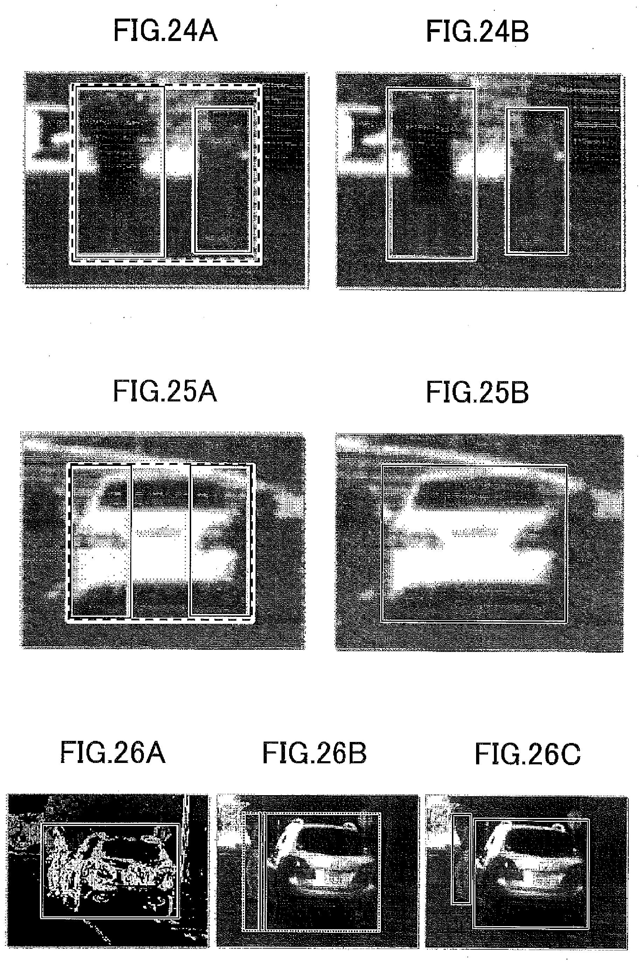

After the above extraction of the line features, in step S124, a new target region determination unit 124 of the target integration/division unit 12 performs the integration/division processing for the candidate target set of each of the ROIs based on the characteristics of the extracted line features, and outputs new target regions. The method for integrating or dividing the candidate target sets of the ROIs is described in the above description of the extraction of the line features. Generally, there are three cases of determination of the new target region. In the first case, for the ROI in which integration processing and division processing are not performed, the target region obtained by the clustering is retained as the new target region. FIGs. 24A and 24B are schematic drawings illustrating an example where a new target region is the same as the target region obtained by preliminary clustering. In the second case, for the ROI where integration processing is performed, the envelop of a plurality of target regions is set as the new target region. FIGs. 25A and 25B are schematic drawings illustrating an example where a new target region is composed of a plurality of target regions obtained by preliminary clustering. In the third case, for the ROI where division processing is performed, it is necessary to determine the division line between the target regions. FIGs. 26A to 26C are schematic drawings illustrating an example where new target regions are obtained by dividing one target region obtained by preliminary clustering. While there are many kinds of methods for determining the division line, a method based on the outline will be described as follows. As illustrated in FIGs. 26A to 26C, the outline of each of the sub-targets is extracted; for the left target, the rightmost U-coordinate of the outline is set as the U-coordinate of the left division line; for the right target, the leftmost U-coordinate of the outline is set as the U-coordinate of the right division line. By this way, the ROI is divided into three parts, the left and right parts are the target regions for the subsequent processing, and the intermediate part is the background region. And then, an analysis based on the grayscale and disparity information is performed for both sides of the division line, and the boundary of the target can be found.

From the above detailed description of the present invention, it is possible to effectively avoid the situation where the same target is divided into a plurality of targets incorrectly due to insufficient horizontal edges of a target in a sparse disparity map. According to the present invention, the integration is performed based on the combination of the line features, the disparity information and the grayscale information, therefore the targets can be detected accurately. Furthermore, according to the target detecting method of the present invention, two adjacent objects (such as a pedestrian and a vehicle) can be effectively divided. Accordingly, according to the target detecting method based on the combination of the line features, the grayscale image and the disparity map, the target with discontinuous horizontal edges in a sparse disparity map can be effectively detected. Compared with a target detecting method based on a dense disparity map, the target detecting method of the present invention is based on a sparse disparity map, therefore the calculation amount can be greatly reduced.

Furthermore, compared with the method based on prior knowledge or the method based on movement, in the method of the present invention, clustering in the disparity map is performed in advance, and integration/division for the target is performed based on the line features. The present invention has a stronger adaptability for a plurality of targets without depending on specific target feature (such as shape, size, texture, etc.). Meanwhile, movement information is not used in the method of the present invention, therefore a stationary target can be effectively detected. Compared with a target detecting method based on a dense disparity map, the target detecting method of the present invention is based on a sparse disparity map, therefore the calculation amount can be greatly reduced.

FIG. 27 is a functional block diagram illustrating an apparatus for detecting a target according to the present invention. As illustrated in FIG. 27, the target detecting apparatus includes the image obtainment unit 10, the candidate target preliminary detection unit 11 and the target integration/division unit 12. The candidate target preliminary detection unit 11 includes the U-disparity map construction unit 111, the clustering unit 112, the target determination unit 113 and the target region filtering unit 114. The target integration/division unit 12 includes the target set selection unit 121, the integration unit 122, the line feature extraction unit 123 and the new target region determination unit 124.

The basic principle of the present invention is described above with reference to the embodiments. Any one or all of the steps or units of the method or apparatus according to the present invention may be implemented by hardware, software or a combination thereof in any one of computing devices (including a processor, a storage medium, etc.) or a network of computing devices, and it can be implemented by persons skilled in the art who have read the specification of the present application.

Therefore, the present invention can also be realized by a program or a set of programs running on any one of computing devices. The computing devices may be well known general-purpose devices. Therefore, the present invention may also be implemented by providing a program product including program codes for implementing the method or apparatus. That is to say, the program product also belongs to the present invention, and a storage medium storing the program product also belongs to the present invention. Obviously, the storage medium may be any one of well known storage media or storage media which are to be developed.

In addition, in the apparatus or method of the present invention, units or steps may be divided and/or recombined. Steps of the above method may be performed in time order, however the performed sequence is not limited to the time order. Any steps may be performed in parallel or independently.

The present application is based on and claims the benefit of priority of Chinese Priority Application No.201310217323.1 filed on June 3, 2013.

## Claims

1. A method for detecting a road target object, the method comprising the steps of:
getting an original disparity map and a grayscale image of a current scene;
performing a target clustering processing based on the disparity map, by clustering adjacent points of a U-disparity map constructed based on the original disparity map, to preliminarily detect candidate targets forming candidate target sets from the original disparity map; and
determining, for each of the candidate target sets, a region of interest (ROI) based on an envelope of all candidate target regions in the candidate target set;
determining foreground target regions in each of the determined ROIs based on a principal component analysis of disparity values;
extracting line features of the determined ROIs, and performing an integration/division processing for the determined ROIs based on the extracted line features to obtain new target objects,
wherein the step of extracting line features of the determined ROIs includes the step of setting a predetermined number of horizontal lines that pass through the foreground target region for each of the ROIs;
detecting a homogeneity of each of the horizontal lines;
wherein the step of detecting the homogeneity of a horizontal line includes:
obtaining the homogeneity of grayscale of each of the horizontal lines by calculating the variance of greyscale of all pixels on the corresponding horizontal line, and obtaining the homogeneity of disparity by performing a PCA (principal component analysis) for all pixels on each of the horizontal lines; and
determining that the horizontal line has homogeneity if the homogeneity of grayscale and the homogeneity of disparity of the horizontal line satisfy a predetermined threshold, and marking pixels that do not satisfy the predetermined threshold as break points of the horizontal line,
and wherein the step of performing the integration/division processing for the ROIs based on the extracted line features to obtain the new target objects includes:
determining that the ROI includes only one target object, if the number of the horizontal lines having homogeneity in the set horizontal lines of the ROI is greater than or equal to a predetermined threshold; and
determining that the ROI includes more than one target object, and dividing the ROI into independent target objects by using the marked break points as a division line, if the number of the horizontal lines having homogeneity in the set horizontal lines of the ROI is less than the predetermined threshold.

2. The method for detecting a road target object according to claim 1,
wherein the step of extracting line features of the ROIs further includes the step of detecting the connectivity of horizontal edges,
wherein the step of detecting the connectivity of the horizontal edges includes:
generating a horizontal edge image based on the grayscale image for each of the ROIs;
analyzing the original disparity map of each of the ROIs, and marking the edge lines with a large difference of disparity values as the edge lines of the different target objects; and
detecting whether there is a continuous horizontal edge line in the generated horizontal edge image, which passes through a foreground target region of the ROI, and marking break points between discontinuous edge lines on a same horizontal line.

3. The method for detecting a road target object according to claim 2,
wherein the step of performing the integration/division processing for the ROIs based on the extracted line features to obtain the new target objects further includes:
determining that the ROI includes only one target object, if one horizontal edge line that passes through the foreground target region of the ROI is detected from the horizontal edge image; and
determining that the ROI includes more than one target object and dividing the ROI into independent target objects by using the marked break points as a division line, if no horizontal edge line that passes through the foreground target region of the ROI is detected from the horizontal edge image.

4. The method for detecting a road target object according to any one of claims 1 to 3,
wherein the step of extracting line features of the ROIs further includes the step of detecting the connectivity of vertical edges,
wherein the step of detecting the connectivity of the vertical edges includes:
generating a vertical edge image based on the grayscale image for each of the ROIs;
analyzing the original disparity map of each of the ROIs, and marking the edge lines with a large difference of disparity values as the edge lines of the different target objects; and
detecting whether there is a continuous vertical edge line in the generated vertical edge image, which passes through a foreground target region of the ROI.

5. The method for detecting a road target object according to claim 4,
wherein the step of performing the integration/division processing for the ROIs based on the extracted line features to obtain the new target objects further includes:
determining that the ROI includes only one target object, if no vertical edge line that passes through the foreground target region of the ROI is detected from the vertical edge image; and
determining that the ROI includes more than one target object and dividing the ROI into a plurality of independent target objects by using the detected vertical edge line as a division line, if a vertical edge line that passes through the foreground target region of the ROI is detected from the vertical edge image.

6. The method for detecting a road target object according to any one of claims 1 to 5,
wherein the step of extracting the line features of the ROIs further includes the step of detecting an envelope outline of edges,
wherein the step of detecting the envelope outline of edges includes extracting an outline from the original grayscale image of each of the ROIs.

7. The method for detecting a road target object according to claim 6,
wherein the step of performing the integration/division processing for the ROIs based on the extracted line features to obtain the new target objects further includes:
determining that the ROI includes only one target object, if it is determined that there is one outline that envelops all foreground target regions in the corresponding ROI in the extracted outlines; and
determining that the ROI includes more than one target object and dividing the ROI into a plurality of independent target objects by using the corresponding outline, if it is determined that there is no outline that envelops all foreground target regions in the corresponding ROI.

8. An apparatus for detecting a road target object, the apparatus comprising:
an image obtainment unit (10) configured to get an original disparity map and a grayscale image of a current scene;
a candidate target preliminary detection unit (11) configured to perform a target clustering processing based on the disparity map, by clustering adjacent points of a U-disparity map constructed based on the original disparity map, to preliminarily detect candidate targets forming candidate target sets from the original disparity map; and
a target integration/division unit (12) configured to determine, for each of the candidate targets, a region of interest (ROI) based on an envelope of all candidate target regions in the candidate target set, determine foreground target regions in each of the determined ROIs based on a principal component analysis of disparity values, extract line features of the determined ROIs, and perform an integration/division processing for the determined ROIs based on the extracted line features to obtain new target objects,
wherein the target integration/division unit (12) is configured to
set a predetermined number of horizontal lines that pass through the foreground target region for each of the ROIs,
detect a homogeneity of each of the horizontal lines, wherein the homogeneity of the predetermined line is detected by the target integration/division unit (12) being configured to
obtain the homogeneity of grayscale of each of the horizontal lines by calculating variance of greyscale of all pixels on the corresponding horizontal line and obtain the homogeneity of disparity by performing a PCA (principal component analysis) for all pixels on each of the horizontal lines; and
determine that the horizontal line has homogeneity if the homogeneity of grayscale and the homogeneity of disparity of the horizontal line satisfy a predetermined threshold,
and mark pixels that do not satisfy the predetermined threshold as break points of the horizontal line,
and wherein the target integration/division unit (12) is configured to perform the integration/division processing for the ROIs based on the extracted line features to obtain the new target objects by being configured to
determine that the ROI includes only one target object, if the number of the horizontal lines having homogeneity in the set horizontal lines of the ROI is greater than or equal to a predetermined threshold; and
determine that the ROI includes more than one target object, and dividing the ROI into independent target objects by using the marked break points as a division line, if the number of the horizontal lines having homogeneity in the set horizontal lines of the ROI is less than the predetermined threshold.

## Patentansprüche

1. Verfahren zum Detektieren eines Straßenzielobjektes, wobei das Verfahren die Schritte umfasst:
Erhalten einer originalen Disparitätskarte und eines Graustufenbildes einer aktuellen Szene;
Ausführen einer Ziel-Clustering-Verarbeitung anhand der Disparitätskarte durch Clustern von benachbarten Punkten einer U-Disparitätskarte, die anhand der originalen Disparitätskarte erstellt wird, um vorläufig Kandidatenziele, die Kandidatenzielgruppen bilden, aus der originalen Disparitätskarte zu detektieren; und
Bestimmen für jede der Kandidatenzielgruppen eines interessierenden Bereichs (ROI) anhand einer Einhüllenden aller Kandidatenzielbereiche in der Kandidatenzielgruppe;
Bestimmen von Vordergrundzielbereichen in jedem der bestimmten ROIs anhand einer Hauptkomponentenanalyse von Disparitätswerten;
Extrahieren von Linienmerkmalen der bestimmten ROIs und Ausführen einer Integrations-/Divisionsverarbeitung für die bestimmten ROIs anhand der extrahierten Linienmerkmale, um neue Zielobjekte zu erhalten,
wobei der Schritt des Extrahierens von Linienmerkmalen der bestimmten ROIs den Schritt enthält, eine vorbestimmte Anzahl horizontaler Linien, die durch den Vordergrundzielbereich führen, für jeden der ROIs einzustellen;
Detektieren einer Homogenität jeder der horizontalen Linien;
wobei der Schritt des Detektierens der Homogenität einer horizontalen Linie enthält:
Erhalten der Homogenität einer Graustufe jeder der horizontalen Linien durch Berechnen der Varianz der Graustufe aller Pixel auf der entsprechenden horizontalen Linie und Erhalten der Homogenität der Disparität durch Ausführen einer PCA (Hauptkomponentenanalyse) für alle Pixel auf jeder der horizontalen Linien; und
Bestimmen, dass die horizontale Linie Homogenität besitzt, wenn die Homogenität der Graustufe und die Homogenität der Disparität der horizontalen Linie einen vorbestimmten Schwellenwert erfüllen, und Markieren von Pixeln, die den vorbestimmten Schwellenwert nicht erfüllen, als Unterbrechungspunkte der horizontalen Linie,
und wobei der Schritt des Ausführens der Integrations-/Divisionsverarbeitung für die ROIs anhand der extrahierten Linienmerkmale, um die neuen Zielobjekte zu erhalten, enthält:
Bestimmen, dass der ROI nur ein Zielobjekt enthält, wenn die Anzahl der horizontalen Linien mit Homogenität in der Gruppe horizontaler Linien des ROI größer als ein vorbestimmter Schwellenwert oder gleich diesem ist; und
Bestimmen, dass der ROI mehr als ein Zielobjekt enthält, und Unterteilen des ROI in unabhängige Zielobjekte durch Verwenden der markierten Unterbrechungspunkte als Unterteilungslinien, wenn die Anzahl der horizontalen Linien mit Homogenität in der Gruppe horizontaler Linien des ROI kleiner als der vorbestimmte Schwellenwert ist.

2. Verfahren zum Detektieren eines Straßenzielobjektes nach Anspruch 1,
wobei der Schritt des Extrahierens von Linienmerkmalen der ROIs ferner den Schritt enthält, die Verbindungsfähigkeit horizontaler Ränder zu detektieren,
wobei der Schritt des Detektierens der Verbindungsfähigkeit der horizontalen Ränder enthält:
Erzeugen eines horizontalen Rands anhand des Graustufenbildes für jeden der ROIs;
Analysieren der originalen Disparitätskarte jedes der ROIs und Markieren der Randlinien mit einem großen Unterschied von Disparitätswerten als die Randlinien der anderen Zielobjekte; und
Detektieren, ob es eine kontinuierliche horizontale Randlinie in dem erzeugten Bild horizontaler Ränder gibt, die durch einen Vordergrundzielbereich des ROI führt, und Markieren von Unterbrechungspunkten zwischen diskontinuierlichen Randlinien auf derselben horizontalen Linie.

3. Verfahren zum Detektieren eines Straßenzielobjektes nach Anspruch 2,
wobei der Schritt des Ausführens der Integrations-/Divisionsverarbeitung für die ROIs anhand der extrahierten Linienmerkmale, um die neuen Zielobjekte zu erhalten, ferner enthält:
Bestimmen, dass der ROI nur ein Zielobjekt enthält, wenn eine horizontale Randlinie, die durch den Vordergrundzielbereich des ROI führt, aus dem Bild horizontaler Ränder detektiert wird; und
Bestimmen, dass der ROI mehr als ein Zielobjekt enthält, und Unterteilen des ROI in unabhängige Zielobjekte durch Verwenden der markierten Unterbrechungspunkte als eine Unterteilungslinie, wenn keine horizontale Randlinie, die durch den Vordergrundzielbereich des ROI führt, aus dem Bild horizontaler Ränder detektiert wird.

4. Verfahren zum Detektieren eines Straßenzielobjektes nach einem der Ansprüche 1 bis 3,
wobei der Schritt des Extrahierens von Linienmerkmalen der ROIs ferner den Schritt enthält, die Verbindungsfähigkeit vertikaler Ränder zu detektieren,
wobei der Schritt des Detektierens der Verbindungsfähigkeit der vertikalen Ränder enthält:
Erzeugen eines Bildes vertikaler Ränder anhand des Graustufenbildes für jeden der ROIs;
Analysieren der originalen Disparitätskarte jedes der ROIs und Markieren der Randlinien mit einem großen Unterschied von Disparitätswerten als die Randlinien der anderen Zielobjekte; und
Detektieren, ob es eine kontinuierliche vertikale Randlinie in dem erzeugten Bild vertikaler Ränder gibt, die durch einen Vordergrundzielbereich des ROI führt.

5. Verfahren zum Detektieren eines Straßenzielobjektes nach Anspruch 4,
wobei der Schritt des Ausführens der Integrations-/Divisionsverarbeitung für die ROIs anhand der extrahierten Linienmerkmale, um die neuen Zielobjekte zu erhalten, ferner enthält:
Bestimmen, dass der ROI nur ein Zielobjekt enthält, wenn keine vertikale Randlinie, die durch den Vordergrundzielbereich des ROI führt, aus dem Bild vertikaler Ränder detektiert wird; und
Bestimmen, dass der ROI mehr als ein Zielobjekt enthält, und Unterteilen des ROI in mehrere unabhängige Zielobjekte durch Verwenden der detektierten vertikalen Randlinie als eine Unterteilungslinie, wenn eine vertikale Randlinie, die durch den Vordergrundzielbereich des ROI führt, aus dem Bild vertikaler Ränder detektiert wird.

6. Verfahren zum Detektieren eines Straßenzielobjektes nach einem der Ansprüche 1 bis 5,
wobei der Schritt des Extrahierens der Linienmerkmale der ROIs ferner den Schritt enthält, einen Einhüllendenumriss von Rändern zu detektieren,
wobei der Schritt des Detektierens des Einhüllendenumrisses von Rändern enthält, einen Umriss aus dem originalen Graustufenbild jedes der ROIs zu extrahieren.

7. Verfahren zum Detektieren eines Straßenzielobjektes nach Anspruch 6,
wobei der Schritt des Ausführens der Integrations-/Divisionsverarbeitung für die ROIs anhand der extrahierten Linienmerkmale, um die neuen Zielobjekte zu erhalten, ferner enthält:
Bestimmen, dass der ROI nur ein Zielobjekt enthält, wenn bestimmt wird, dass es einen Umriss, der alle Vordergrundzielbereiche in dem entsprechenden ROI einhüllt, in den extrahierten Umrissen gibt; und
Bestimmen, dass der ROI mehr als ein Zielobjekt enthält, und Unterteilen des ROI in mehrere unabhängige Zielobjekte durch Verwenden des entsprechenden Umrisses, wenn bestimmt wird, dass es keinen Umriss gibt, der alle Vordergrundzielbereiche in dem entsprechenden ROI einhüllt.

8. Vorrichtung zum Detektieren eines Straßenzielobjektes, wobei die Vorrichtung umfasst:
eine Bilderfassungseinheit (10), die konfiguriert ist, eine originale Disparitätskarte und ein Graustufenbild einer aktuellen Szene zu erhalten;
eine Einheit zur vorläufigen Detektion von Kandidatenzielen (11), die konfiguriert ist, eine Ziel-Clustering-Verarbeitung anhand der Disparitätskarte, durch Clustern von benachbarten Punkten einer U-Disparitätskarte, die anhand der originalen Disparitätskarte erstellt wird, auszuführen, um vorläufig Kandidatenziele, die Kandidatenzielgruppen bilden, aus der originalen Disparitätskarte zu detektieren; und
eine Zielintegrations-/Zieldivisionseinheit (12), die konfiguriert ist, für jedes der Kandidatenziele einen interessierenden Bereich (ROI) anhand einer Einhüllenden aller Kandidatenzielbereiche in der Kandidatenzielgruppe zu bestimmen, Vordergrundzielbereiche in jedem der bestimmten ROIs anhand einer Hauptkomponentenanalyse von Disparitätswerten zu bestimmen, Linienmerkmale der bestimmten ROIs zu extrahieren und eine Integrations-/Divisionsverarbeitung für die bestimmten ROIs anhand der extrahierten Linienmerkmale auszuführen, um neue Zielobjekte zu erhalten,
wobei die Zielintegrations-/Zieldivisionseinheit (12) konfiguriert ist zum
Einstellen einer vorbestimmten Anzahl horizontaler Linien, die durch den Vordergrundzielbereich führen, für jeden der ROIs;
Detektieren einer Homogenität jeder der horizontalen Linien, wobei die Homogenität der vorbestimmten Linie durch die Zielintegrations-/Zieldivisionseinheit (12) detektiert wird, die konfiguriert ist zum:
Erhalten der Homogenität der Graustufe jeder der horizontalen Linien durch Berechnen der Varianz der Graustufe aller Pixel auf der entsprechenden horizontalen Linie und Erhalten der Homogenität der Disparität durch Ausführen einer PCA (Hauptkomponentenanalyse) für alle Pixel auf jeder der horizontalen Linien; und
Bestimmen, dass die horizontale Linie Homogenität besitzt, wenn die Homogenität der Graustufe und die Homogenität der Disparität der horizontalen Linie einen vorbestimmten Schwellenwert erfüllen,
und Markieren von Pixeln, die den vorbestimmten Schwellenwert nicht erfüllen, als Unterbrechungspunkte der horizontalen Linie,
und wobei die Zielintegrations-/Zieldivisionseinheit (12) konfiguriert ist, die Integrations-/Divisionsverarbeitung für die ROIs anhand der extrahierten Linienmerkmale auszuführen, um die neuen Zielobjekte zu erhalten, indem sie konfiguriert ist zum:
Bestimmen, dass der ROI nur ein Zielobjekt enthält, wenn die Anzahl der horizontalen Linien mit Homogenität in der Gruppe horizontaler Linien des ROI größer als ein vorbestimmter Schwellenwert oder gleich diesem ist; und
Bestimmen, dass der ROI mehr als ein Zielobjekt enthält, und Unterteilen des ROI in unabhängige Zielobjekte durch Verwenden der markierten Unterbrechungspunkte als eine Unterteilungslinie, wenn die Anzahl der horizontalen Linien mit Homogenität in der Gruppe horizontaler Linien des ROI kleiner als der vorbestimmte Schwellenwert ist.

## Revendications

1. Procédé de détection d'un objet cible de route, le procédé comprenant les étapes consistant à :
obtenir une carte de disparités d'origine et une image en niveaux de gris d'une scène actuelle ;
effectuer un traitement de regroupement de cibles en fonction de la carte de disparités, par le regroupement de points adjacents d'une carte de disparités en U construite en fonction de la carte de disparités d'origine, pour détecter à titre préliminaire des cibles candidates formant des ensembles de cibles candidates à partir de la carte de disparités d'origine ; et
déterminer, pour chacun des ensembles de cibles candidates, d'une région d'intérêt (ROI) en fonction d'une enveloppe de toutes les régions cibles candidates dans l'ensemble de cibles candidates ;
déterminer des régions cibles d'avant-plan dans chacune des ROI déterminées en fonction d'une analyse en composantes principales de valeurs de disparité ;
extraire des caractéristiques linéaires des ROI déterminées, et effectuer un processus d'intégration / de division pour les ROI déterminées en fonction des caractéristiques linéaires extraites pour obtenir de nouveaux objets cibles,
l'étape d'extraction de caractéristiques linéaires des ROI déterminées comprenant l'étape de définition d'un nombre prédéterminé de lignes horizontales qui passent par la région cible d'avant-plan pour chacune des ROI ;
détecter une homogénéité de chacune des lignes horizontales ;
l'étape de détection de l'homogénéité d'une ligne horizontale comprenant :
l'obtention de l'homogénéité de niveaux de gris de chacune des lignes horizontales par le calcul de l'écart de niveaux de gris de tous les pixels sur la ligne horizontale correspondante, et l'obtention de l'homogénéité de disparité par la réalisation d'une PCA (analyse en composantes principales) pour tous les pixels sur chacune des lignes horizontales ; et
la détermination que la ligne horizontale présente une homogénéité si l'homogénéité de niveaux de gris et l'homogénéité de disparité de la ligne horizontale satisfont à un seuil prédéterminé, et le marquage de pixels qui ne satisfont pas au seuil prédéterminé en tant que points de rupture de la ligne horizontale,
et l'étape de réalisation du processus d'intégration / de division pour les ROI en fonction des caractéristiques linéaires extraites pour obtenir les nouveaux objets cibles comprenant :
la détermination que la ROI comprend seulement un objet cible, si le nombre des lignes horizontales présentant une homogénéité dans les lignes horizontales définies de la ROI est supérieur ou égal à un seuil prédéterminé ; et
la détermination que la ROI comprend plus d'un objet cible, et la division de la ROI en objets cibles indépendants à l'aide des points de rupture marqués comme ligne de division, si le nombre des lignes horizontales présentant une homogénéité dans les lignes horizontales définies de la ROI est inférieur au seuil prédéterminé.

2. Procédé de détection d'un objet cible de route selon la revendication 1,
dans lequel l'étape d'extraction de caractéristiques linéaires des ROI comprend en outre l'étape de détection de la connectivité de bords horizontaux,
dans lequel l'étape de détection de la connectivité des bords horizontaux comprend :
la génération d'une image de bord horizontal en fonction de l'image en niveaux de gris pour chacune des ROI ;
l'analyse de la carte de disparités d'origine de chacune des ROI et le marquage de lignes de bord avec une grande différence de valeurs de disparité comme lignes de bord des différents objets cibles; et
la détection de savoir s'il existe une ligne de bord horizontale continue dans l'image de bord horizontale générée, qui passe par une région cible d'avant-plan des ROI, et le marquage de points de rupture entre des lignes de bord discontinues sur une même ligne horizontale.

3. Procédé de détection d'un objet cible de route selon la revendication 2,
dans lequel l'étape de réalisation du processus d'intégration / de division pour les ROI en fonction des caractéristiques linéaires extraites pour obtenir les nouveaux objets cibles comprend en outre :
la détermination que la ROI comprend seulement un objet cible, si une ligne de bord horizontal qui passe par la région cible d'avant-plan de la ROI est détectée à partir de l'image de bord horizontal ; et
la détermination que la ROI comprend plus d'un objet cible et la division de la ROI en objets cibles indépendants à l'aide des points de rupture marqués comme ligne de division, si aucune ligne de bord horizontal qui passe par la région cible d'avant-plan de la ROI n'est détectée à partir de l'image de bord horizontal.

4. Procédé de détection d'un objet cible de route selon l'une quelconque des revendication 1 à 3,
dans lequel l'étape d'extraction de caractéristiques linéaires des ROI comprend en outre l'étape de détection de la connectivité de bords verticaux,
dans lequel l'étape de détection de la connectivité des bords verticaux comprend :
la génération d'une image de bord vertical en fonction de l'image en niveaux de gris pour chacune des ROI ;
l'analyse de la carte de disparités d'origine de chacune des ROI et le marquage de lignes de bord avec une grande différence de valeurs de disparité en tant que lignes de bord des différents objets cibles ; et
la détection de savoir s'il existe une ligne de bord vertical continue dans l'image de bord vertical générée, qui passe par une région cible d'avant-plan de la ROI.

5. Procédé de détection d'un objet cible de route selon la revendication 4,
dans lequel l'étape de réalisation du processus d'intégration / de division pour les ROI en fonction des caractéristiques linéaires extraites pour obtenir les nouveaux objets cibles comprend en outre :
la détermination que la ROI comprend seulement un objet cible, si aucune ligne de bord vertical qui passe par la région cible d'avant-plan de la ROI n'est détectée à partir de l'image de bord vertical ; et
la détermination que la ROI comprend plus d'un objet cible et la division de la ROI en une pluralité d'objets cibles indépendants à l'aide de la ligne de bord vertical détectée en tant que ligne de division, si une ligne de bord vertical qui passe par la région cible d'avant-plan de la ROI est détectée à partir de l'image de bord vertical.

6. Procédé de détection d'un objet cible de route selon l'une quelconque des revendication 1 à 5,
dans lequel l'étape d'extraction des caractéristiques linéaires des ROI comprend en outre l'étape de détection d'un contour d'enveloppe de bords,
dans lequel l'étape de détection du contour d'enveloppe de bords comprend l'extraction d'un contour à partir de l'image en niveaux de gris d'origine de chacune des ROI.

7. Procédé de détection d'un objet cible de route selon la revendication 6,
dans lequel l'étape de réalisation du processus d'intégration / de division pour les ROI en fonction des caractéristiques linéaires extraites pour obtenir les nouveaux objets cibles comprend en outre :
la détermination que la ROI comprend seulement un objet cible, si l'on détermine qu'il existe un contour qui enveloppe toutes les régions cibles d'avant-plan dans la ROI correspondante dans les contours extraits ; et
la détermination que la ROI comprend plus d'un objet cible et la division de la ROI en une pluralité d'objets cibles indépendants à l'aide du contour correspondant, si l'on détermine qu'il n'existe aucun contour qui enveloppe toutes les régions cibles d'avant-plan dans la ROI correspondante.

8. Appareil de détection d'un objet cible de route, l'appareil comprenant :
une unité d'obtention d'image (10) conçue pour obtenir une carte de disparités d'origine et une image en niveaux de gris d'une scène actuelle ;
une unité de détection préliminaire de cible candidate (11) conçue pour effectuer un traitement de regroupement de cibles en fonction de la carte de disparités, par le regroupement de points adjacents d'une carte de disparités en U construite en fonction de la carte de disparités d'origine, pour détecter à titre préliminaire des cibles candidates formant des ensembles de cibles candidates à partir de la carte de disparités d'origine ; et
une unité d'intégration / de division de cible (12) conçue pour déterminer, pour chacune des cibles candidates, une région d'intérêt (ROI) en fonction d'une enveloppe de toutes les régions cibles candidates dans l'ensemble de cibles candidates, déterminer des régions cibles d'avant-plan dans chacune des ROI déterminées en fonction d'une analyse en composantes principales de valeurs de disparité, extraire des caractéristiques linéaires des ROI déterminées et effectuer un traitement d'intégration / de division pour les ROI déterminées en fonction des caractéristiques linéaires extraites pour obtenir de nouveaux objets cibles,
dans lequel l'unité d'intégration / de division de cible (12) est conçue pour :
définir un nombre prédéterminé de lignes horizontales qui passent par la région cible d'avant-plan pour chacune des ROI,
détecter une homogénéité de chacune des lignes horizontales, l'homogénéité de la ligne prédéterminée étant détectée par l'unité d'intégration / de division de cible (12) étant conçue pour
obtenir l'homogénéité de niveaux de gris de chacune des lignes horizontales par le calcul de la variance de niveaux de gris de tous les pixels sur la ligne horizontale correspondante et obtenir l'homogénéité de disparités par la réalisation d'une PCA (analyse en composantes principales) pour tous les pixels sur chacune des lignes horizontales ; et
déterminer que la ligne horizontale présente une homogénéité si l'homogénéité de niveaux de gris et l'homogénéité de disparités de la ligne horizontale satisfont à un seuil prédéterminé,
et marquer des pixels qui ne satisfont pas au seuil prédéterminé en tant que points de rupture de la ligne horizontale,
et l'unité d'intégration / de division de cible (12) étant conçue pour effectuer le processus d'intégration / de division pour les ROI en fonction des caractéristiques linéaires extraites pour obtenir les nouveaux objets cibles en étant conçue pour
déterminer que la ROI comprend seulement un objet cible, si le nombre des lignes horizontales présentant une homogénéité dans les lignes horizontales définies de la ROI est supérieur ou égal à un seuil prédéterminé ; et
déterminer que la ROI comprend plus d'un objet cible, et la division de la ROI en objets cibles indépendants à l'aide des points de rupture marqués comme ligne de division, si le nombre des lignes horizontales présentant une homogénéité dans les lignes horizontales définies de la ROI est inférieur au seuil prédéterminé.
